# EUROPEAN PATENT APPLICATION

(11) **EP 4 644 121 A1**
(43) Date of publication of application: **05.11.2025**
(21) Application number: 23908702.6
(22) Date of filing: 26.12.2023
(51) Int. Cl.: B32B 27/12, C09D 163/00

(54) **NEGATIVE OXYGEN ION EPOXY COILED MATERIAL AND PREPARATION METHOD THEREFOR**

(30) Priority: 26.12.2022 CN 202211675331; 17.08.2023 CN 202311039042
(71) Applicant: Zhejiang Gangliu Polymer Technology Co., Ltd, Hangzhou, Zhejiang 310000 (CN)
(72) Inventor: ZHANG, Chaoshe, Hangzhou, Zhejiang 310000 (CN)
(74) Representative: Metida
(86) International application number: PCT/CN2023/142137
(87) International publication number: WO 2024/140746

(57) **Abstract**

Provided are a negative oxygen ion epoxy coiled material and a preparation method thereof. The coiled material is in a laminated structure, sequentially including a negative oxygen ion surface layer, a strengthening layer and a bottom layer from top to bottom; the negative oxygen ion surface layer is transparent and is formed by a negative oxygen ion coating after curing; the negative oxygen ion coating is comprised of a component A and a component B in a weight ratio of 100:50~80; the component A is composed of epoxy resin, diluent, negative oxygen ion agent, coupling agent, abrasion resistant filler, anti-settling agent, dispersant, antifoaming agent and leveling agent; and the component B is curing agent. Powder negative oxygen ion agent which is dissolvable and has suitable particle size is introduced for compound combination. When it is compounded with epoxy resin and auxiliary agent, a negative oxygen ion surface layer with a transparent surface is obtained, thereby having features of high negative ion performance, good abrasion resistance, and a long service life.

## Description

### Technical field

The specification relates to the technical field of polymer coatings and epoxy coiled materials, and in particular to a negative oxygen ion epoxy coiled material and a preparation method thereof.

### Background

With the continuous development of the modern industrial production environment, production workshops are increasingly moving towards cleaning workshops and closed production environments. The reduction and purification of air pollutants, particles, floating in the air, volatile organic compounds, etc. in closed spaces have become increasingly important.

Negative oxygen ions are simulation of substances in nature, thereby realizing the research and development of new technologies. The technology that charge excites negative oxygen ion technology is used. The main function of negative oxygen ions is to purify the air, remove formaldehyde, and effectively eliminate dust particles and smoke.

Currently, negative oxygen ion products used for indoor air purification are mainly sprayed onto surfaces such as indoor walls and ceilings, or applied to carriers such as breathable coatings, and breathable fabrics. The amount of negative oxygen ions in the environment is increased through the contact between negative oxygen ion additives and ambient air. However, for cleaning production space, materials used for walls and ceilings typically has very high density, such as color steel plates and baked fluorocarbon coatings, etc.

On the market, there are very few negative oxygen ion products that meet the requirements for cleaning workshops, and there are almost no flooring materials that not only meet the requirements for floors in cleaning workshops but also can purify the air with negative oxygen ions. Therefore, it is necessary to provide an epoxy coiled material that can meet the purification needs of cleaning workshops, effectively release a large amount of negative oxygen ions for air purification, and have a good purification effect.

### Summary

The specification provides a negative oxygen ion epoxy coiled material and a preparation method thereof. The negative oxygen ion epoxy coiled material can not only create a permanent negative oxygen ion purifying environment with a high release rate of negative oxygen ions, but also has a transparent surface layer. It meets the requirements of floors in cleaning workshops, including integrity, stain resistance, abrasion resistance, environmental friendliness, and absence of volatile emissions.

The specific technical solutions are as follows:
The specification provides a negative oxygen ion epoxy coiled material. It is in a laminated structure, and sequentially includes a negative oxygen ion surface layer, a strengthening layer and a bottom layer from top to bottom; the negative oxygen ion surface layer is transparent and is formed by a negative oxygen ion coating after curing; and
the negative oxygen ion coating is comprised of a component A and a component B in a weight ratio of 100:50~80;
the component A is composed of following materials in parts by weight:

| | |
|---|---|
| epoxy resin | 60~70 parts; |
| toughening agent | 3~8 parts; |
| diluent | 8~15 parts; |
| negative oxygen ion agent | 3~10 parts; |
| coupling agent | 0.5~1 part: |
| abrasion resistant filler | 0.3~2 parts; |
| antisettling agent | 1~5 parts; |
| dispersant | 0.5~1 part; |
| antifoaming agent | 0.3~1 part; |
| leveling agent | 0.3~1 part; and |

the component B is comprised of 100 parts of curing agent.

Furthermore, the epoxy resin is bisphenol A liquid epoxy resin or bisphenol F liquid epoxy resin, and the epoxide equivalent weight of the epoxy resin is 150~250eq/100g. The epoxy resin does not contain solvent, and has low viscosity and high reactivity, thus meeting the preparation requirements in the specification, with fast cross-linking curing speed; and it has high transparency and is suitable for preparing a transparent coating surface layer.

Furthermore, the bisphenol A liquid epoxy resin is NPEL-128, E51 or E44; and the bisphenol F liquid epoxy resin is NPEL-170.

Furthermore, the negative oxygen ion agent is at least one of tourmaline powder, seagull stone, attapulgite, monazite powder, and modified soluble negative ion power; and a mesh number of the negative oxygen ion agent is 4000~8000.

The surface layer of the negative oxygen ion epoxy coiled material provided by the specification needs to achieve certain transparency to meet the relevant requirements of the cleaning workshop. Thus it is necessary to consider the influence of the raw materials on the transparency of the product when raw materials such as negative oxygen ion agent, abrasion resistant filler and anti-settling agent are selected. It is found in the experiment that the negative oxygen ion agent with the above specific particle size can simultaneously meet the requirements of transparency, negative oxygen ion release amount, abrasion resistance and scratch resistance of products.

Furthermore, the modified soluble negative ion agent is at least one of quaternary ammonium salt and zirconium phosphate. In the system of the specification, it has a certain solubility, it can combine with the negative oxygen ion powder to improve the negative oxygen ion release effect, and it is dissolved in the system without affecting the coating performance.

Furthermore, when the negative oxygen ion agent comprises a combination of tourmaline powder and quaternary ammonium salt, the mass fraction ratio of tourmaline powder and quaternary ammonium salt is 4~6:0.3~0.6; when the negative oxygen ion agent comprises a combination of monazite powder and zirconium phosphate, The mass fraction ratio of monazite powder and zirconium phosphate is 6~8:0.8~1.2; and when the negative oxygen ion agent comprises a combination of tourmaline powder, seagull stone and attapulgite, the mass fraction ratio of tourmaline powder, seagull stone and attapulgite is 3.5~4.5:2.5~3.5:0.8~1.2.

Furthermore, the coupling agent is silane coupling agent; and the silane coupling agent is at least one of 3-methacryloxypropyltrimethoxysilane, γ-( 2,3-Epoxy propoxy) propyltrimethoxysilicane, and y -aminopropyl triethoxysilane. This kind of coupling agent has good compatibility with the epoxy resin system, and can have chemical coupling reactions with the negative oxygen ion agent and the particle surface of the abrasion resistant filler, which greatly improves the wettability and coupling effects of the resin system and the powder; and secondly the coupling agent can also interact with the anti-settling agent without affecting the anti-settling performance, and it can reduce the viscosity of the resin coating, promote dispersion, and enhance mechanical properties.

Furthermore, the abrasion resistant filler is at least one of alumina oxide, zirconia, and ultra-high molecular weight polyethylene powder; and average particle size of the abrasion resistant filler is 30~200nm. The above abrasion resistant filler is easily dispersed in the epoxy resin system, which can significantly reduce the amount of the abrasion resistant filler; and on the basis of a relatively low amount of abrasion resistant filler, the abrasion resistance of the coating can be significantly improved, and the transparency of the coating is not affected after the addition of the nanosized abrasion resistant filler.

Furthermore, the anti-settling agent is hydrophobic fumed silica with a specific surface area of 100~400m²/g. It is found in the experiment that the hydrophobic fumed silica can make the negative oxygen ion agent and the abrasion resistant filler disperse more uniformly, thereby ensuring the transparency of the surface layer of the product and ensuring higher abrasion resistance and flexural resistance. Hydrophobic fumed silica is obtained through chemical reaction for fumed silica, making it easier to disperse in oil-based systems without affecting the transparency of the coating. Due to its large specific surface area, the accumulation and settling of powder can be effectively prevented.

Furthermore, the toughening agent is one of Z400 and Z500; the diluent is one of AGE, BGE, and 632; the dispersant is BYK104S; the antifoaming agent is BYK-066N; the leveling agent is BYK354; and the curing agent is a modified amine curing agent, and the specific model of it is GL-22 (i.e., TJ-22).

Furthermore, the strengthening layer is made of fiberglass cloth with a thickness of 0.15~0.3mm and a gram weight of 90~350g/m²; the strengthening layer and the negative oxygen ion surface layer are bonded by a priming coating, and the bottom layer is formed by the priming coating after curing; and
the priming coating is comprised of a component I and a component II in a weight ratio of 100:50~80; the component I is composed of 95 parts of the negative oxygen ion coatings and 5 parts of color paste; and the component II is comprised of 100 parts of curing agent.

The specification also provides a preparation method of the negative oxygen ion epoxy coiled material, including the following steps:
(1) coating a negative oxygen ion coating on a release film, and removing the release film after curing, to form a negative oxygen ion surface layer;
(2) coating a priming coating on the negative oxygen ion surface layer, and bonding it to fiberglass cloth, to form a fiberglass cloth strengthening layer after curing;
(3) coating a priming coating on the fiberglass cloth strengthening layer, to form a priming coating layer after curing; and
(4) doing cooling, trimming edges and rolling up for the material obtained by step (3), to obtain a negative oxygen ion epoxy coiled material.

Furthermore, in steps (1) to (3), a temperature for the curing is 80~100°C.

Furthermore, the matte release film is one of a PET film or release paper with a glossiness from 10~30 GU (at an angle of 60 degree).

Compared with the prior art, the specification has the following beneficial effects:
(1) In the specification, powder negative oxygen ion agent which is dissolvable and has suitable particle size is introduced for compound combination. When it is compounded with epoxy resin and auxiliary agent, a negative oxygen ion surface layer with a transparent surface is obtained, and the epoxy coiled material has high negative ion performance, good abrasion resistance, and a long service life.
(2) In the specification, fiberglass cloth is used as the strengthening material, nanoscale abrasion resistant filler is introduced into the surface layer, and thus the surface layer is transparent and can protect the color, which not only improves the mechanical properties of the coiled material, but also improves the abrasion resistance and prolongs the service life.
(3) In the specification, high temperature curing process and industrial production line are adopted, which ensures the stability of the material properties and is not affected by environmental climate, temperature and humidity.

### Detailed Description

The specification will be further described below in conjunction with specific embodiments. The embodiments listed below are only specific embodiments of the specification, but the protection scope of the specification is not limited thereto.

The materials and sources mentioned in the following embodiments are:
epoxy resin NPEL-128, and NPEL-170 (Nanya Electronic Materials (Kunshan) Co., LTD.); epoxy resin E-44, and E-51 (Jiangsu Sanmu Chemical Co., LTD.); diluent AGE, BGE, and 632 (Hubei Greenhome Chemical Co., LTD.); toughening agent Z-400, Z-500, color paste, and curing agent GL-22 (i.e. TJ-22) (Hangzhou Gangliu New Materials Co., LTD.); dispersant BYK104S, antifoaming agent BYK066N, and leveling agent BYK354 (Shanghai BYK Additives Co., LTD.); alumina oxide, zirconia, and ultra-high molecular weight polyethylene powder (Hangzhou Hengna Materials Co., LTD.); tourmaline powder, seagull stone, attapulgite, and monazite powder (Liyang Mineral Products (Lingshou County) Trading Co., LTD.); and quaternary ammonium salt, and zirconium phosphate (Hangzhou Yangyiju Environmental Protection Technology Co., LTD.).

The indicators mentioned in the following embodiments are tested in following methods: transparency: determined by using "Determination of the luminous transmittance and haze of transparent plastics GB/T 2410"; number of negative oxygen ions: determined by using "General requirements for negative air ion including wood-based panels and their finishing products LY/T3235-2020"; surface hardness: determined by using "Paints and varnishes-Determination of film hardness by pencil test GB/T 6739"; and abrasion resistance: determined by using "Floor coating GB/T 3829".

### Example 1

### 1. Preparation of a negative oxygen ion coating

Preparation of a component A: it is obtained by mixing and evenly stirring following compounds: 69 parts of epoxy resin NPEL-128 with epoxide equivalent of 186eq/100g; 6 parts of toughening agent Z-400; 13 parts of diluent 632; 6 parts of 5000-mesh tourmaline powder, and 0.5 parts of quaternary ammonium salt; 0.6 parts of coupling agent, 3-methacryloxypropyltrimethoxysilane; 0.5 parts of abrasion resistant filler, 50-nanometer alumina oxide; 3 parts of hydrophobic fumed silica with a specific surface area of 200m²/g; 0.8 parts of dispersant BYK104S; 0.3 parts of antifoaming agent BYK-066N; and 0.3 parts of leveling agent BYK354;
a component B is 100 parts of curing agent GL-22; and
the component A and the component B are mixed in a weight ratio of 100:70 and are stirred evenly, to prepare a negative oxygen ion coating.

### 2. Preparation of a priming coating

Preparation of a component I: it is obtained by mixing and evenly stirring 95 parts of the negative oxygen ion coatings prepared in above step 1 and 5 parts of color paste;
a component II is 100 parts of curing agent GL-22; and
the component I and the component II are mixed in a weight ratio of 100:75 and are stirred evenly, to prepare a priming coating.

### 3. Preparation of a negative oxygen ion epoxy coiled material

The specific preparation method includes the following steps:
(1) coating a negative oxygen ion coating on a PET film with a glossiness of 20GU (at an angle of 60 degree), then placing it at a temperature of 95°C for baking and curing, and removing a release film after the curing, to form a negative oxygen ion surface layer;
(2) coating a priming coating on the negative oxygen ion surface layer, and bonding it with fiberglass cloth, to form a fiberglass cloth strengthening layer after curing at a temperature of 95°C;
(3) coating a priming coating on the fiberglass cloth strengthening layer, to form a priming coating layer after curing at a temperature of 95°C; and
(4) doing cooling, trimming edges and rolling up for the material obtained by step (3), to obtain a negative oxygen ion epoxy coiled material.

After testing, transparency of the negative oxygen ion epoxy coiled material is 90%; number of negative oxygen ions is 3550/cm³, abrasion resistance is 0.001g, and pencil hardness is 4H.

### Example 2

### 1. Preparation of a negative oxygen ion coating

Preparation of a component A: it is obtained by mixing and evenly stirring following compounds: 55 parts of epoxy resin NPEL-170 with epoxy equivalent of 171eq/100g; 10 parts of epoxy resin E44; 7 parts of toughening agent Z-500; 14 parts of diluent AGE; 7 parts of 7000-mesh monazite powder, 1 part of zirconium phosphate;1 part of coupling agent, 3-glycidyloxypropyltrimethoxysilane; 1.5 parts of abrasion resistant filler, 100-nanometer zirconia; 1 part of hydrophobic fumed silica with a specific surface area of 400m²/g; 1 part of dispersant BYK104S; 1 part of antifoaming agent BYK-066N; and 0.5 parts of leveling agent BYK354;
a component B is 100 parts of curing agent GL-22; and
the component A and the component B are mixed in a weight ratio of 100:65 and are stirred evenly, to prepare a negative oxygen ion coating.

### 2. Preparation of a priming coating

Preparation of a component I: it is obtained by mixing and evenly stirring 95 parts of the negative oxygen ion coatings prepared in above step 1 and 5 parts of color paste;
a component II is 100 parts of curing agent GL-22; and
the component I and the component II are mixed in a weight ratio of 100:70 and are stirred evenly, to prepare a priming coating.

### 3. Preparation of a negative oxygen ion epoxy coiled material

The specific preparation method includes the following steps:
(1) coating a negative oxygen ion coating on release paper with a glossiness of 10GU (at an angle of 60 degree), then placing it at a temperature of 90°C for baking and curing, and removing a release film after the curing, to form a negative oxygen ion surface layer;
(2) coating a priming coating on the negative oxygen ion surface layer, and bonding it with fiberglass cloth, to form a fiberglass cloth strengthening layer after curing at a temperature of 90°C;
(3) coating a priming coating on the fiberglass cloth strengthening layer, to form a priming coating layer after curing at a temperature of 100°C; and
(4) doing cooling, trimming edges and rolling up for the material obtained by step (3), to obtain a negative oxygen ion epoxy coiled material.

After testing, transparency of the negative oxygen ion epoxy coiled material is 85%; number of negative oxygen ions is 3550/cm³, abrasion resistance is 0.001g, and pencil hardness is 4H.

### Example 3

### 1. Preparation of a negative oxygen ion coating:

Preparation of a component A: it is obtained by mixing and evenly stirring following compounds: 63 parts of epoxy resin E51 with equivalent weight of 194eq/100g; 8 parts of toughening agent Z-500; 15 parts of diluent AGE; 4 parts of 6000-mesh tourmaline powder; 3 parts of 7000-mesh seagull stone; 1 part of 6000-mesh attapulgite; 1 parts of 3-aminopropyltriethoxysilane; 0.5 parts of 100nm ultra-high molecular weight polyethylene powder; 3 parts of hydrophobic fumed silica with a specific surface area of 200m²/g; 0.5 parts of dispersant BYK104S; 0.5 parts of antifoaming agent BYK-066N; and 0.5 parts of leveling agent BYK354;
a component B is 100 parts of curing agent GL-22; and
the component A and the component B are mixed in a weight ratio of 100:75 and are stirred evenly, to prepare a negative oxygen ion coating.

### 2. Preparation of a priming coating

Preparation of a component I: it is obtained by mixing and evenly stirring 95 parts of the negative oxygen ion coatings prepared in above step 1 and 5 parts of color paste;
a component II is 100 parts of curing agent GL-22; and
the component I and the component II are mixed in a weight ratio of 100:75 and are stirred evenly, to prepare a priming coating .

### 3. Preparation of a negative oxygen ion epoxy coiled material

The specific preparation method includes the following steps:
(1) coating a negative oxygen ion coating on release paper with a glossiness of 25GU (at an angle of 60 degree), then placing it at a temperature of 85°C for baking and curing, and removing a release film after the curing, to form a negative oxygen ion surface layer;
(2) coating a priming coating on the negative oxygen ion surface layer, and bonding it with fiberglass cloth, to form a fiberglass cloth strengthening layer after curing at a temperature of 85°C;
(3) coating a priming coating on the fiberglass cloth strengthening layer, to form a priming coating layer after curing at a temperature of 95°C; and
(4) doing cooling, trimming edges and rolling up for the material obtained by step (3), to obtain a negative oxygen ion epoxy coiled material.

After testing, transparency of the negative oxygen ion epoxy coiled material is 80%; number of negative oxygen ions is 4050/cm³, abrasion resistance is 0.001g, and pencil hardness is 4H.

### Comparative example 1

### 1. Preparation of a negative oxygen ion coating:

Preparation of a component A: it is obtained by mixing and evenly stirring following compounds: 69 parts of epoxy resin NPEL-128 with epoxide equivalent of 186eq/100g; 6 parts of toughening agent Z-400; 13 parts of diluent 632; 6 parts of 5000-mesh far-infrared powder, and 0.5 parts of quaternary ammonium salt; 0.6 parts of coupling agent, 3-methacryloxypropyltrimethoxysilane; 0.5 parts of abrasion resistant filler, 50-nanometer alumina oxide; 3 parts of hydrophobic fumed silica with a specific surface area of 200m²/g; 0.8 parts of dispersant BYK104S; 0.3 parts of antifoaming agent BYK-066N; and 0.3 parts of leveling agent BYK354;
a component B is 100 parts of curing agent GL-22; and
the component A and the component B are mixed in a weight ratio of 100:70 and are stirred evenly, to prepare a negative oxygen ion coating.

### 2. Preparation of a priming coating

Preparation of a component I: it is obtained by mixing and evenly stirring 95 parts of the negative oxygen ion coatings prepared in above step 1 and 5 parts of color paste;
a component II is 100 parts of curing agent GL-22; and
the component I and the component II are mixed in a weight ratio of 100:75 and are stirred evenly, to prepare a priming coating.

### 3. Preparation of a negative oxygen ion epoxy coiled material

The specific preparation method includes the following steps:
(1) coating a negative oxygen ion coating on a PET film with a glossiness of 20GU (at an angle of 60 degree), then placing it at a temperature of 95°C for baking and curing, and removing a release film after the curing, to form a negative oxygen ion surface layer;
(2) coating a priming coating on the negative oxygen ion surface layer, and bonding it with fiberglass cloth, to form a fiberglass cloth strengthening layer after curing at a temperature of 95°C;
(3) coating a priming coating on the fiberglass cloth strengthening layer, to form a priming coating layer after curing at a temperature of 95°C; and
(4) doing cooling, trimming edges and rolling up for the material obtained by step (3), to obtain a negative oxygen ion epoxy coiled material.

### Comparative example 2

### 1. Preparation of a negative oxygen ion coating

Preparation of a component A: it is obtained by mixing and evenly stirring following compounds: 69 parts of epoxy resin NPEL-128 with epoxide equivalent of 186eq/100g; 6 parts of toughening agent Z-400; 13 parts of diluent 632; 6 parts of 5000-mesh tourmaline powder, and 0.5 parts of quaternary ammonium salt; 0.6 parts of coupling agent, 3-methacryloxypropyltrimethoxysilane; 0.5 parts of abrasion resistant filler, 50-nanometer white alumina; 3 parts of hydrophobic fumed silica with a specific surface area of 200m²/g; 0.8 parts of dispersant BYK104S; 0.3 parts of antifoaming agent BYK-066N; and 0.3 parts of leveling agent BYK354;
a component B is 100 parts of curing agent GL-22; and
the component A and the component B are mixed in a weight ratio of 100:70 and are stirred evenly, to prepare a negative oxygen ion coating.

### 2. Preparation of a priming coating

Preparation of a component I: it is obtained by mixing and evenly stirring 95 parts of the negative oxygen ion coatings prepared in above step 1 and 5 parts of color paste;
a component II is 100 parts of curing agent GL-22; and
the component I and the component II are mixed in a weight ratio of 100:75 and are stirred evenly, to prepare a priming coating.

### 3. Preparation of a negative oxygen ion epoxy coiled material

The specific preparation method includes the following steps:
(1) coating a negative oxygen ion coating on a PET film with a glossiness of 20GU (at an angle of 60 degree), then placing it at a temperature of 95°C for baking and curing, and removing a release film after the curing, to form a negative oxygen ion surface layer;
(2) coating a priming coating on the negative oxygen ion surface layer, and bonding it with fiberglass cloth, to form a fiberglass cloth strengthening layer after curing at a temperature of 95°C;
(3) coating a priming coating on the fiberglass cloth strengthening layer, to form a priming coating layer after curing at a temperature of 95°C; and
(4) doing cooling, trimming edges and rolling up for the material obtained by step (3), to obtain a negative oxygen ion epoxy coiled material.

### Comparative example 3

### 1. Preparation of a negative oxygen ion coating

Preparation of a component A: it is obtained by mixing and evenly stirring following compounds: 69 parts of epoxy resin NPEL-128 with epoxide equivalent of 186eq/100g; 6 parts of toughening agent Z-400; 13 parts of diluent 632; 6 parts of 5000-mesh tourmaline powder, and 0.5 parts of quaternary ammonium salt; 0.6 parts of coupling agent, 3-methacryloxypropyltrimethoxysilane; 0.5 parts of abrasion resistant filler, 50-nanometer alumina oxide; 3 parts of hydrophilic fumed silica with a specific surface area of 200m²/g; 0.8 parts of dispersant BYK104S; 0.3 parts of antifoaming agent BYK-066N; and 0.3 parts of leveling agent BYK354;
a component B is 100 parts of curing agent GL-22; and
the component A and the component B are mixed in a weight ratio of 100:70 and are stirred evenly, to prepare a negative oxygen ion coating.

### 2. Preparation of a priming coating

Preparation of a component I: it is obtained by mixing and evenly stirring 95 parts of the negative oxygen ion coatings prepared in above step 1 and 5 parts of color paste;
a component II is 100 parts of curing agent GL-22; and
the component I and the component II are mixed in a weight ratio of 100:75 and are stirred evenly, to prepare a priming coating.

### 3. Preparation of a negative oxygen ion epoxy coiled material

The specific preparation method includes the following steps:
(1) coating a negative oxygen ion coating on a PET film with a glossiness of 20GU (at an angle of 60 degree), then placing it at a temperature of 95°C for baking and curing, and removing a release film after the curing, to form a negative oxygen ion surface layer;
(2) coating a priming coating on the negative oxygen ion surface layer, and bonding it with fiberglass cloth, to form a fiberglass cloth strengthening layer after curing at a temperature of 95°C;
(3) coating a priming coating on the fiberglass cloth strengthening layer, to form a priming coating layer after curing at a temperature of 95°C; and
(4) doing cooling, trimming edges and rolling up for the material obtained by step (3), to obtain a negative oxygen ion epoxy coiled material.

### Comparative example 4

### 1. Preparation of a negative oxygen ion coating

Preparation of a component A: it is obtained by mixing and evenly stirring following compounds: 69 parts of epoxy resin NPEL-128 with epoxide equivalent of 186eq/100g; 6 parts of toughening agent Z-400; 13 parts of diluent 632; 6 parts of 1500-mesh tourmaline powder, and 0.5 parts of quaternary ammonium salt; 0.6 parts of coupling agent, 3-methacryloxypropyltrimethoxysilane; 0.5 parts of abrasion resistant filler, 50-nanometer alumina oxide; 3 parts of hydrophobic fumed silica with a specific surface area of 200m²/g; 0.8 parts of dispersant BYK104S; 0.3 parts of antifoaming agent BYK-066N; and 0.3 parts of leveling agent BYK354;
a component B is 100 parts of curing agent GL-22; and
the component A and the component B are mixed in a weight ratio of 100:70 and are stirred evenly, to prepare a negative oxygen ion coating.

### 2. Preparation of a priming coating

Preparation of a component I: it is obtained by mixing and evenly stirring 95 parts of the negative oxygen ion coatings prepared in above step 1 and 5 parts of color paste;
a component II is 100 parts of curing agent GL-22; and
the component I and the component II are mixed in a weight ratio of 100:75 and are stirred evenly, to prepare a priming coating.

### 3. Preparation of a negative oxygen ion epoxy coiled material

The specific preparation method includes the following steps:
(1) coating a negative oxygen ion coating on a PET film with a glossiness of 20GU (at an angle of 60 degree), then placing it at a temperature of 95°C for baking and curing, and removing a release film after the curing, to form a negative oxygen ion surface layer;
(2) coating a priming coating on the negative oxygen ion surface layer, and bonding it with fiberglass cloth, to form a fiberglass cloth strengthening layer after curing at a temperature of 95°C;
(3) coating a priming coating on the fiberglass cloth strengthening layer, to form a priming coating layer after curing at a temperature of 95°C; and
(4) doing cooling, trimming edges and rolling up for the material obtained by step (3), to obtain a negative oxygen ion epoxy coiled material.

### Comparative example 5

### 1. Preparation of a negative oxygen ion coating

Preparation of a component A: it is obtained by mixing and evenly stirring following compounds: 69 parts of epoxy resin NPEL-128 with epoxide equivalent of 186eq/100g; 6 parts of toughening agent Z-400; 13 parts of diluent 632; 6 parts of 12500-mesh tourmaline powder, and 0.5 parts of quaternary ammonium salt; 0.6 parts of coupling agent, 3-methacryloxypropyltrimethoxysilane; 0.5 parts of abrasion resistant filler, 50-nanometer alumina oxide; 3 parts of hydrophobic fumed silica with a specific surface area of 200m²/g; 0.8 parts of dispersant BYK104S; 0.3 parts of antifoaming agent BYK-066N; and 0.3 parts of leveling agent BYK354;
a component B is 100 parts of curing agent GL-22; and
the component A and the component B are mixed in a weight ratio of 100:70 and are stirred evenly, to prepare a negative oxygen ion coating.

### 2. Preparation of a priming coating

Preparation of a component I: it is obtained by mixing and evenly stirring 95 parts of the negative oxygen ion coatings prepared in above step 1 and 5 parts of color paste;
a component II is 100 parts of curing agent GL-22; and
the component I and the component II are mixed in a weight ratio of 100:75 and are stirred evenly, to prepare a priming coating.

### 3. Preparation of a negative oxygen ion epoxy coiled material

The specific preparation method includes the following steps:
(1) coating a negative oxygen ion coating on a PET film with a glossiness of 20GU (at an angle of 60 degree), then placing it at a temperature of 95°C for baking and curing, and removing a release film after the curing, to form a negative oxygen ion surface layer;
(2) coating a priming coating on the negative oxygen ion surface layer, and bonding it with fiberglass cloth, to form a fiberglass cloth strengthening layer after curing at a temperature of 95°C;
(3) coating a priming coating on the fiberglass cloth strengthening layer, to form a priming coating layer after curing at a temperature of 95°C; and
(4) doing cooling, trimming edges and rolling up for the material obtained by step (3), to obtain a negative oxygen ion epoxy coiled material.

The materials prepared in examples 1 to 3 and comparative examples 1 to 5 are tested in transparency, number of negative oxygen ions, abrasion resistance and pencil hardness, and results are shown in Table 1.

**Table1 Results of transparency, number of negative oxygen ions, abrasion resistance and pencil hardness for the materials prepared in examples 1 to 3 and comparative examples 1 to 5**

| | Transparency | Number of negative oxygen ions | Abrasion resistance | Pencil hardness |
|---|---|---|---|---|
| Example 1 | 90% | 3550/cm³ | 0.001g | 4H |
| Example 2 | 85% | 3350/cm³ | 0.001g | 4H |
| Example 3 | 80% | 4050/cm³ | 0.001g | 4H |
| Comparative example 1 | 10% | 300/cm³ | 0.001g | 4H |
| Comparative example 2 | non-transparent | 3330/cm³ | 0.003g | 3H |
| Comparative example 3 | 50% | 2580/cm³ | 0.002g | 4H |
| Comparative example 4 | 30% | 1360/cm³ | 0.001g | 4H |
| Comparative Example 5 | 70% | 2388/cm³ | 0.001g | 4H |

## Claims

1. A negative oxygen ion epoxy coiled material, **characterized in that** it is in a laminated structure, and sequentially comprises a negative oxygen ion surface layer, a strengthening layer and a bottom layer from top to bottom; the negative oxygen ion surface layer is transparent and is formed by a negative oxygen ion coating after curing; and
the negative oxygen ion coating is comprised of a component A and a component B in a weight ratio of 100:50~80;
wherein the component A is comprised of following materials in parts by weight:
| | |
|---|---|
| epoxy resin | 60~70 parts; |
| toughening agent | 3~8 parts; |
| diluent | 8~15 parts; |
| negative oxygen ion agent | 3~10 parts; |
| coupling agent | 0.5~1 part: |
| abrasion resistant filler | 0.3~2 parts; |
| anti-settling agent | 1~5 parts; |
| dispersant | 0.5~1 part; |
| antifoaming agent | 0.3~1 part; |
| leveling agent | 0.3~1 part; and |
the component B is comprised of 100 parts of curing agent.

2. The negative oxygen ion epoxy coiled material according to claim 1, **characterized in that** the epoxy resin is bisphenol A liquid epoxy resin or bisphenol F liquid epoxy resin, and the epoxide equivalent weight of the epoxy resin is 150~250 eq/100g.

3. The negative oxygen ion epoxy coiled material according to claim 1, **characterized in that** the negative oxygen ion agent is at least one of tourmaline powder, seagull stone, attapulgite, monazite powder, and modified soluble negative ion powder; and a mesh number of the negative oxygen ion agent is 4000~8000.

4. The negative oxygen ion epoxy coiled material according to claim 3, **characterized in that** the modified soluble negative ion agent is at least one of quaternary ammonium salt and zirconium phosphate.

5. The negative oxygen ion epoxy coiled material according to claim 1, **characterized in that** the coupling agent is silane coupling agent; and the silane coupling agent is at least one of 3-methacryloxypropyltrimethoxysilane, γ -( 2,3-Epoxy propoxy) propyltrimethoxysilicane, and y -aminopropyl triethoxysilane.

6. The negative oxygen ion epoxy coiled material according to claim 1, **characterized in that** the abrasion resistant filler is at least one of alumina oxide, zirconia, and ultra-high molecular weight polyethylene powder; and average particle size of the abrasion resistant filler is 30~200nm.

7. The negative oxygen ion epoxy coiled material according to claim 1, **characterized in that** the anti-settling agent is hydrophobic fumed silica with a specific surface area of 100~400m2/g.

8. The negative oxygen ion epoxy coiled material according to claim 1, **characterized in that** the strengthening layer is made of fiberglass cloth with a thickness of 0.15~0.3mm and a gram weight of 90~350g/m2; the strengthening layer and the negative oxygen ion surface layer are bonded by a priming coating, and the bottom layer is formed by the priming coating after curing; and
the priming coating is comprised of a component I and a component II in a weight ratio of 100:50~80; wherein the component I is comprised of 95 parts of the negative oxygen ion coatings and 5 parts of color paste; and the component II is comprised of 100 parts of curing agent.

9. A preparation method of the negative oxygen ion epoxy coiled material according to any one of claims 1 to 7, **characterized in that** it comprises the following steps:
(1) coating a negative oxygen ion coating on a release film, and removing the release film after curing, to form a negative oxygen ion surface layer;
(2) coating a priming coating on the negative oxygen ion surface layer, and bonding it to fiberglass cloth, to form a fiberglass cloth strengthening layer after curing;
(3) coating a priming coating on the fiberglass cloth strengthening layer, to form a priming coating layer after curing; and
(4) doing cooling, trimming edges and rolling up for the material obtained by step (3), to obtain a negative oxygen ion epoxy coiled material.

10. The preparation method according to claim 9, **characterized in that** the temperature for the curing in steps (1)~(3) is 80~100°C.
